# FASCICULE DE BREVET EUROPEEN

(11) **EP 1 998 406 B1**
(45) Date de publication et mention de la délivrance du brevet: **12.08.2020**
(21) Numéro de dépôt: 08156966.7
(22) Date de dépôt: 27.05.2008
(51) Int. Cl.: H01R 9/22, H01R 43/24, B60H 1/22, H05B 3/50, F24H 9/18

(54) **Dispositif de connexion électrique entre une source d'alimentation électrique et un radiateur électrique, et procédé de réalisation d'un tel dispositif de connexion.**
Elektrische Anschlussvorrichtung zwischen einer Stromversorgungsquelle und einem elektrischen Heizkörper und Anwendungsverfahren einer solchen Anschlussvorrichtung
Electrical connection device between a power input source and an electric radiator, and method for manufacturing such a connection device

(30) Priorité: 01.06.2007 FR 0703910
(43) Date de publication de la demande: 03.12.2008
(73) Titulaire: Valeo Systèmes Thermiques, 78321 Le Mesnil St Denis Cedex (FR)
(72) Inventeur: Terranova, Gilbert, 78610, le perray en Yvelines (FR); Puzenat, Bertrand, 78180, Montigny le Bretonneux (FR); Gatinois, Jean, 78760, Jouars Pontchartrain (FR); Tellier, Laurent, 75116, Paris (FR)
(74) Mandataire: Tran, Chi-Hai

(56) Documents cités:
- EP-A- 0 722 264
- EP-A- 0 901 311
- EP-A- 1 675 220
- DE-A1- 10 323 768
- FR-A1- 2 750 824
- FR-A1- 2 855 933
- GB-A- 2 408 156
- US-A1- 2005 221 643

## Description

### Domaine technique de l'invention.

La présente invention est du domaine des installations de ventilation, de chauffage et/ou de climatisation, notamment d'un véhicule automobile. Elle a pour objet un dispositif de connexion électrique entre une source d'alimentation électrique et un radiateur électrique constitutif d'une telle installation.
Le document FR 2 855 933, qui peut être considéré comme le document de l'art antérieur le plus proche de l'invention, décrit un tel dispositif selon le préambule de la revendication 1.
L'invention a aussi pour objet un procédé de réalisation d'un tel dispositif de connexion.

### Etat de la technique.

La température de l'air contenu à l'intérieur de l'habitacle d'un véhicule automobile est couramment régulée à partir de la mise en œuvre d'une installation de ventilation, de chauffage et/ou de climatisation équipant le véhicule. Une telle installation comporte fréquemment un dispositif additionnel de chauffage électrique qui est destiné à réchauffer un flux d'air circulant à travers le dispositif préalablement à sa délivrance à l'intérieur de l'habitacle. Plus particulièrement, un tel dispositif additionnel est destiné à compléter le traitement thermique dudit flux d'air procuré par un radiateur principal que comporte ladite installation. Ce complément est par exemple nécessaire immédiatement après la mise en oeuvre du moteur du véhicule, c'est-à-dire pendant un laps de temps où la puissance calorifique délivrée par le radiateur principal est insuffisante pour procurer le confort thermique désiré par un passager du véhicule.
A cet effet, le dispositif additionnel comprend un radiateur électrique additionnel, ou analogue, constitué d'au moins un élément chauffant disposé dans le flux d'air à réchauffer. Le dispositif additionnel est pourvu d'un dispositif de commande de la mise en oeuvre sélective de l'élément chauffant, par exemple en fonction d'une requête de confort thermique déterminée par un passager du véhicule. Dans le cas où les éléments chauffants sont en pluralité, le dispositif de commande comporte autant d'interrupteurs électriques que le corps de chauffe comporte d'éléments chauffants. Chaque interrupteur électrique est constitué d'un composant électronique comportant notamment un transistor à effet de champ Métal-Oxyde, couramment dénommé par l'acronyme anglais « MOSFET ».

L'interrupteur électrique est destiné à autoriser et/ou interdire la mise sous tension électrique de l'élément chauffant auquel il est relié pour réchauffement de celui-ci par effet Joule. Cette mise sous tension consiste à appliquer une différence de potentiel, typiquement de l'ordre de 12 V, entre une borne de masse et une borne de tension de l'élément chauffant. La mise sous tension est réalisée par l'intermédiaire d'un dispositif de connexion entre lesdites bornes de l'élément chauffant et des plots d'une source d'alimentation en énergie électrique, telle qu'une batterie ou analogue. Plus particulièrement, le dispositif de connexion comprend une première liaison électrique entre un plot de masse de ladite source et la borne de masse de l'élément chauffant, et une deuxième liaison électrique entre un plot de tension de ladite source et la borne de tension de l'élément chauffant. Typiquement, un tel dispositif de connexion véhicule un courant de forte intensité, de l'ordre de 30 ampères notamment. Pour connaître un environnement technologique proche de la présente invention, on pourra par exemple se reporter au document EP0901311 (BEHR GmbH).

Un premier problème posé par l'utilisation de dispositifs de connexion traditionnels réside dans le fait qu'ils sont encombrants ce qui constitue un inconvénient pour leur assemblage au corps de chauffe. Il en résulte par ailleurs un accroissement du volume global du radiateur électrique additionnel, ce qu'il est souhaitable d'éviter.

Un deuxième problème posé par la mise en œuvre de ces dispositifs de connexion réside dans le fait qu'ils sont constitués d'un nombre de pièces conséquents. Il en découle que de tels dispositifs de connexion sont complexes à réaliser et présentent des coûts de fabrication rédhibitoires. Il en résulte aussi une fragilité importante de ces dispositifs dont les pièces constitutives sont susceptibles de se désolidariser aisément les unes des autres, soit à partir de la dilatation thermique différentielle de ces pièces, soit à partir de vibrations mécaniques auxquelles ces dispositifs de connexion sont soumis.

Un troisième problème réside dans le fait que l'assemblage entre elles de ces pièces est long, fastidieux, et source d'erreurs. Il en ressort un accroissement supplémentaire des coûts de fabrication et la nécessité de mettre en œuvre des tests de vérification qui augmentent encore le temps nécessaire pour la fabrication de tels dispositifs de connexion.

Un quatrième problème posé réside dans le fait que ces dispositifs de connexion sont souvent à l'origine de courts-circuits susceptibles d'engendrer des départs de feu. De tels inconvénients se révèlent d'autant plus fréquents que l'environnement dans lequel est placé le dispositif de connexion est humide. Il en ressort que la sécurisation de tels dispositifs de connexion mérite d'être améliorée, d'autant que l'intensité électrique qui les parcourt est importante.

### Objet de l'invention.

Le but de la présente invention est de proposer un dispositif de connexion électrique interposé entre des plots d'une source d'alimentation électrique et des bornes d'au moins un élément chauffant constitutif d'un radiateur électrique traversé par un flux d'air, ce dispositif de connexion étant simple de conception, tout en procurant une sécurité de fonctionnement optimisée, notamment en atmosphère humide, ce dispositif de connexion étant par ailleurs robuste et pérenne et présentant un faible encombrement. Il est aussi visé par la présente invention de proposer un procédé de réalisation d'un tel dispositif de connexion, ce procédé étant aisé et rapide à mettre en œuvre, tout en garantissant une robustesse et une pérennité améliorée du dit dispositif.

Le dispositif de connexion de la présente invention est un dispositif de connexion électrique interposé entre des plots d'une source d'alimentation électrique et des bornes d'au moins un élément chauffant constitutif d'un radiateur électrique traversé par un flux d'air. Le dispositif de connexion électrique comprend :
- une première liaison électrique entre une première borne électrique de l'élément chauffant et un premier plot de ladite source. Ledit premier plot est porté à un premier potentiel électrique, et
- une deuxième liaison électrique entre une deuxième borne électrique de l'élément chauffant et un deuxième plot de ladite source. Ledit deuxième plot est porté à un second potentiel électrique différent du premier potentiel électrique.
On comprendra que les premier et deuxième plots de ladite source sont portés à des potentiels électriques respectifs qui sont différents l'un de l'autre. Il en découle qu'il existe une différence de potentiel non nulle entre les premier et deuxième plots, cette différence de potentiel étant couramment de l'ordre de 12 Volts. Par exemple, le premier potentiel électrique auquel est porté le premier plot est un potentiel de masse, c'est-à-dire de 0 Volt, tandis que le deuxième potentiel auquel est porté le deuxième plot est un potentiel de tension, couramment de 12 Volts. Par exemple encore, le premier potentiel électrique auquel est porté le premier plot est un potentiel de tension tandis que le deuxième potentiel auquel est porté le deuxième plot est un potentiel de masse. La présente invention s'applique indifféremment à l'un ou l'autre des exemples susvisés.

Selon la présente invention, la première liaison électrique comprend un premier conducteur électrique et au moins un deuxième conducteur électrique, et la deuxième liaison électrique comprend un troisième conducteur électrique monobloc, les premier, deuxième et troisième conducteurs électriques étant conjointement et au moins partiellement noyés dans une matrice électriquement isolante.

Ces dispositions sont telles que la première et la deuxième liaison électrique sont isolées l'une de l'autre par l'intermédiaire de la matrice électriquement isolante, pour éviter la formation d'un arc électrique entre elles susceptible de provoquer un départ de feu.

Il ressort aussi de ces dispositions qu'un tel dispositif de connexion est robuste, notamment en raison de l'enveloppement des liaisons électriques à l'intérieur de la matrice isolante. Il en découle une cohésion du dispositif de connexion qui facilite sa manipulation et son assemblage au radiateur électrique au moins. Cette cohésion augmente aussi la pérennité du dispositif de connexion qui n'est pas affecté par les dilatations thermiques différentielles des pièces qui le compose et/ou par les vibrations mécaniques auxquelles il est susceptible d'être soumis.
Il résulte aussi de ces dispositions qu'un tel dispositif de connexion est obtenu à partir d'un nombre limité de pièces, ce qui facilite sa réalisation et réduit ses coûts d'obtention.
Le premier conducteur électrique et au moins le deuxième conducteur électrique sont assemblés entre eux par l'intermédiaire d'un support plan qui est agencé en une carte électronique de commande de la mise en œuvre du radiateur électrique.
Il en ressort que le support plan n'est soumis qu'au premier potentiel de la première liaison électrique sans être soumis au deuxième potentiel affectant la deuxième liaison électrique. Il en découle que des composants assemblés sur le support plan sont portés au premier potentiel électrique, indifféremment 0 Volt ou 12 Volts selon les exemples susvisés, en étant totalement isolés de la deuxième liaison électrique, indifféremment portée au potentiel de 12 Volts ou de 0 Volt selon les mêmes exemples susvisés. Il en découle une sécurisation du fonctionnement d'un tel dispositif de connexion, notamment dans le cas où l'intensité du courant circulant à travers le dispositif de connexion est importante, par exemple de l'ordre de 30 ampères.

Par ailleurs, ces dispositions sont telles que des fenêtres peuvent être facilement ménagées à travers la matrice, pour permettre un accès visuel confortable aux composants portés par le support plan et/ou un accès physique commode à ces composants en vue d'une vérification de leur fonctionnement.

Le premier conducteur électrique comporte au moins une première patte de liaison électrique avec la carte électronique, et le deuxième conducteur électrique comporte une deuxième patte de liaison électrique avec la carte électronique, les première et deuxième pattes de liaison émergeant hors de la matrice pour leur mise en contact électrique avec une piste électrique respective que comporte ladite carte électronique.
Ces dispositions sont telles que la matrice à l'intérieur de laquelle sont noyées les liaisons électriques est aisément assemblable sur la carte électronique par l'intermédiaire uniquement des première et deuxième pattes de liaison électrique. Ainsi, ces dernières sont facilement soudées ou brasées sur la piste électrique correspondante de la carte électronique.
La piste électrique est préférentiellement équipée d'un interrupteur électrique interposé entre les première et deuxième pattes de liaison électrique. L'interrupteur électrique est notamment un transistor à effet de champ Métal-Oxyde. L'interrupteur électrique est également susceptible d'être un relais magnétique.
Le premier conducteur électrique est avantageusement constitué d'un premier ensemble monobloc comprenant :
- un premier plot de connexion électrique avec l'un des plots de ladite source, et
- un bandeau conducteur équipé du premier plot de connexion électrique et d'au moins une première patte de liaison électrique.

Ces dispositions sont telles qu'un tel premier conducteur est apte à appliquer une tension à un nombre quelconque d'éléments chauffants que comporte le radiateur électrique par l'intermédiaire du nombre correspondant de premières pattes de liaison. Ces multiples connexions sont réalisées à partir de la mise en œuvre d'une seule pièce constituée du premier conducteur, ce qui présente les avantages de permettre un assemblage aisé et rapide. De plus un tel premier conducteur est aisé à fabriquer, par exemple à partir d'un feuillard réalisé en un matériau métallique conducteur, tel que le cuivre ou analogue.

Le premier plot de connexion électrique s'étend préférentiellement dans un plan P1 sensiblement orthogonal à un plan P d'extension générale du support plan. Le plan P1 est dépendant de l'orientation imposée par un connecteur alimentant le radiateur électrique en énergie électrique. Il en ressort que le plan P1 est susceptible d'être ménagé sensiblement parallèlement au plan P. Le plan P1 est aussi susceptible d'être orienté en formant un angle compris entre 0° et 90° par rapport au plan P dans lequel s'étend le support plan. Ces dernières dispositions sont telles que la mise en relation électrique entre le premier plot de connexion électrique et le plot correspondant de ladite source est aisément réalisable sans accroître l'encombrement du dispositif de connexion dans une direction contenue dans le plan P. En d'autres termes, une orthogonalité entre le plan P1 et le plan P permet de libérer de l'espace dans le plan P.

Le bandeau conducteur s'étend avantageusement dans un plan P2 sensiblement parallèle au plan P d'extension générale du support plan.

Ladite première patte de connexion électrique s'étend de préférence au moins partiellement dans un plan P3 sensiblement parallèle au plan P.

Le deuxième conducteur électrique est avantageusement constitué d'un deuxième ensemble monobloc comprenant une languette conductrice équipée à l'une de ses extrémités d'une première borne de liaison électrique avec l'une des bornes de l'élément chauffant et à l'autre de ses extrémités de la deuxième patte de liaison électrique avec la piste électrique.

Un tel deuxième conducteur est également aisé à fabriquer, par exemple à partir d'un feuillard réalisé en un matériau métallique conducteur, tel que le cuivre ou analogue.

De préférence, la languette conductrice s'étend dans le plan P2.

Il ressort de ces dispositions que la languette et le bandeau conducteur sont disposés dans un même plan pour assurer la meilleure compacité possible au dispositif de connexion, une distance L2 entre le plan P2 et le plan P du support plan étant la plus réduite possible, de quelques millimètres notamment.

Ladite première borne de liaison électrique s'étend avantageusement dans un plan P4 sensiblement parallèle au plan P.

Ladite deuxième patte de liaison électrique s'étend de préférence au moins partiellement dans le plan P3.

Ces dispositions sont telles que les première et deuxième pattes de liaison électrique s'étendent dans un même plan, en l'occurrence le plan P3, pour faciliter leur assemblage sur la carte électronique par soudage, par brasage ou par toute autre technique d'assemblage analogue.

Le troisième conducteur électrique comprend avantageusement :
- un deuxième plot de connexion électrique avec l'autre des plots de ladite source,
- un plateau conducteur principal qui est bordé :
   - d'un premier plateau conducteur secondaire reliant le plateau conducteur principal au deuxième plot de connexion électrique,
   - d'au moins un deuxième plateau conducteur secondaire reliant le plateau conducteur principal à une deuxième borne de liaison électrique avec l'autre des bornes de l'élément chauffant.

Un tel troisième conducteur est également aisé à fabriquer, selon une technique analogue à celle mise en œuvre pour l'obtention des premier et deuxième conducteurs.

Le plateau conducteur principal s'étend de préférence dans un plan P5 sensiblement parallèle au plan P.

Les premier et deuxième plateaux secondaires s'étendent avantageusement dans le plan P2.

Il ressort de ces dispositions que la languette, le bandeau conducteur et les plateaux secondaires sont disposés dans un même plan pour assurer la meilleure compacité possible au dispositif de connexion et pour permettre un enveloppement aisé par la matrice.

La deuxième borne de liaison électrique s'étend préférentiellement dans un plan P6 sensiblement parallèle au plan P.

Le fait que la première borne de liaison électrique et la deuxième borne de liaison électrique s'étendent dans des plans parallèles, notamment distincts, facilite l'assemblage du dispositif de connexion aux bornes correspondantes de l'élément chauffant.

Les éléments chauffants du corps de chauffe étant au nombre de N, le dispositif de connexion comporte avantageusement un premier conducteur électrique, un troisième conducteur électrique et N deuxièmes conducteurs électriques.

Ces dispositions sont telles que le nombre de pièces mises en œuvre pour former un tel dispositif de connexion est réduit au minimum, sans affecter la sécurisation du fonctionnement de ce dernier, tout en facilitant son assemblage.

La matrice constitue avantageusement un moyen de maintien entre eux du bandeau conducteur, de la languette conductrice et des premier et deuxième plateaux conducteurs secondaires.

Il ressort de ces dispositions qu'un tel dispositif de connexion est robuste à partir d'un solide maintien des trois conducteurs électriques mis en œuvre par l'intermédiaire de la matrice. En effet, cette dernière enveloppe au moins une partie constitutive de chacun d'entre eux pour assurer la cohésion du dispositif de connexion, notamment à l'encontre de dilatations différentielles de ses pièces constitutives et/ou de vibrations mécaniques.

De préférence, les première et deuxième bornes de liaison électrique émergent hors de la matrice pour leur connexion aux bornes correspondantes de l'élément chauffant.

L'interrupteur électrique est avantageusement interposé entre le plateau conducteur principal et la carte électronique.

Une distance L5 entre le plan P5 et le plan P est préférentiellement de l'ordre de la hauteur de l'interrupteur électrique.

La distance L5 est avantageusement supérieure à l'une quelconque de la distance L2 prise entre le plan P2 et le plan P, d'une distance L3 prise entre le plan P3 et le plan P, d'une distance L4 prise entre le plan P4 et le plan P et d'une distance L6 prise entre le plan P6 et le plan P.

Ces dispositions sont telles que selon une direction perpendiculaire au plan P, l'encombrement du dispositif de connexion est globalement limité à la distance L5 qui est de l'ordre de la hauteur d'un transistor à effet de champ Métal-Oxyde, et/ou d'un relais magnétique.

Le plateau conducteur principal s'étend de préférence selon une direction D3 qui est parallèle à une direction D1 d'extension générale du bandeau conducteur.

Ces dispositions sont telles que les premier, deuxième et troisième conducteurs sont agencés entre eux pour limiter au maximum l'encombrement dans le plan P2 au moins dans lequel ils s'étendent au moins partiellement.

Un procédé de réalisation d'un tel dispositif de connexion est principalement reconnaissable en ce qu'il comporte une étape d'apport par surmoulage de la matrice autour des premier, deuxième et troisième conducteurs électriques.

Le procédé de réalisation comporte en outre préférentiellement une étape de refusion au cours de laquelle un interrupteur électrique et les première et deuxième pattes de liaison électrique sont simultanément rapportés par soudage sur une piste électrique d'une carte de commande.

### Description des figures.

La présente invention sera mieux comprise, et des détails en relevant apparaîtront, à la lecture de la description qui va être faite de variantes de réalisation en relation avec les figures des planches annexées, dans lesquelles :
La fig.1 est une illustration schématique d'une première variante de réalisation d'un dispositif de connexion selon la présente invention.
La fig.2 est une vue schématique en coupe d'une deuxième variante de réalisation d'un dispositif de connexion selon la présente invention
La fig.3 est une vue schématique de dessus du dispositif de connexion illustré sur la figure précédente.
La fig.4 est une illustration en perspective du dispositif de connexion représenté sur les fig.2 et fig.3.
Les fig.5, fig.6 et fig.7 sont des illustrations en perspective d'éléments conducteurs constitutifs du dispositif de connexion représenté sur les fig.2 à fig.4.
La fig.8 est une illustration en perspective d'un troisième élément conducteur constitutif du dispositif de connexion représenté sur les fig.2 à fig.7.
La fig.9 est une illustration en perspective d'un premier élément conducteur constitutif du dispositif de connexion représenté sur les fig.2 à fig.7.

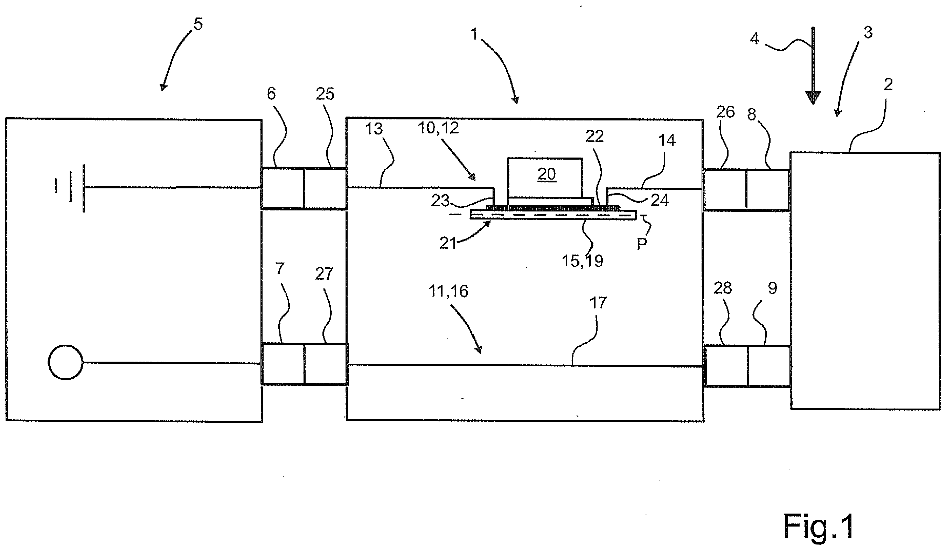

Sur la fig.1, un dispositif de connexion 1 est interposé entre un élément chauffant 2 constitutif d'un radiateur électrique 3 traversé par un flux d'air 4 et une source d'alimentation électrique 5. L'élément chauffant 2 est par exemple une résistance, telle qu'une résistance à coefficient de transfert positif, « CTP », ou analogue, qui est destinée à réchauffer le flux d'air 4 par convection. Selon la variante illustrée schématiquement sur la fig.1, le radiateur électrique 3 comprend un seul élément chauffant 2 mais est susceptible d'en comporter une pluralité sans déroger aux règles de la présente invention. Le radiateur électrique 3 est notamment un radiateur additionnel d'une installation de ventilation, de chauffage et/ou de climatisation d'un véhicule. Ce radiateur additionnel est plus particulièrement destiné à compléter un premier traitement thermique du flux d'air 4 procuré par un radiateur principal que comporte ladite installation.

La source d'alimentation électrique 5 est notamment une batterie, telle que la batterie principale du véhicule ou une batterie annexe. La source d'alimentation électrique 5 est pourvue d'un premier plot électrique 6 porté à un premier potentiel, par exemple de 0 Volt, et d'un deuxième plot électrique 7, porté à un deuxième potentiel qui est différent du premier potentiel, par exemple de 12 Volts, pour alimenter électriquement l'élément chauffant 2. Cette alimentation électrique est destinée à appliquer une tension électrique entre une première borne 8, de masse selon l'exemple susvisé, et une deuxième borne 9, de tension selon l'exemple susvisé, que comporte l'élément chauffant 2. Cette tension électrique est couramment de l'ordre de 12 Volts, mais peut différer de cette valeur commune. L'application de cette tension entre les première 8 et deuxième 9 bornes de l'élément chauffant 2 provoque un échauffement par effet Joule de celui-ci 2, qui permet de réchauffer rapidement le flux d'air 4.

Pour assurer une continuité électrique entre d'une part le premier plot 6 et la première borne 8, et d'autre part le deuxième plot 7 et la deuxième borne 9, le dispositif de connexion 1 comporte deux liaisons électriques distinctes 10,11 :
- une première liaison électrique 10 qui relie entre eux le premier plot 6 et la première borne 8, et
- une deuxième liaison électrique 11 qui relie entre eux le deuxième plot 7 et la deuxième borne 9.

Pour améliorer la sécurité de fonctionnement d'un tel dispositif de connexion 1, sans en complexifier la structure ou les modalités de sa réalisation et/ou de son assemblage, il est avantageusement proposé par la présente invention que la première liaison électrique 10, indifféremment de masse ou de tension, comprenne un premier conducteur électrique 13 et au moins un deuxième conducteur électrique 14, tandis que la deuxième liaison électrique 11, indifféremment de tension ou de masse, comprend un troisième conducteur électrique monobloc 17. Il est également proposé par la présente invention que les première 10 et deuxième 11 liaisons électriques soient partiellement noyées dans une matrice 18 réalisée en un matériau électriquement isolant. Accessoirement, il est avantageusement proposé que le premier conducteur électrique 13 et au moins le deuxième conducteur électrique 14 soient assemblés entre eux par l'intermédiaire d'un support plan 15 étendu dans un plan P.

Sur la variante illustrée sur la fig.1, la première liaison électrique 10 est constituée est une liaison électrique de masse, portée au potentiel de 0 Volt, tandis que la deuxième liaison électrique 11 est une liaison électrique de tension, portée au potentiel de 12 Volts. Toutefois, selon une autre variante de réalisation, la première liaison électrique est une liaison électrique de tension tandis que la deuxième liaison électrique est une liaison électrique de masse. En effet, la présente invention est principalement reconnaissable en ce que l'une quelconque des première 10 et deuxième 11 liaisons électriques est constituée du premier conducteur électrique 13 relié électriquement au deuxième conducteur électrique 14 par l'intermédiaire du support plan 15 et que l'autre liaison électrique 11,10 est constituée d'un troisième conducteur électrique 17, préférentiellement monobloc, les première 10 et deuxième 11 liaisons électriques étant isolées l'une de l'autre par l'intermédiaire de la matrice 18 électriquement isolante. A partir d'une telle organisation du dispositif de connexion 1, il est remarquable que le support plan 15 n'est soumis qu'au potentiel de la première liaison électrique 10, soit 0 Volt sur la variante illustré sur la fig.1, la deuxième liaison électrique 11, portée au potentiel de 12 Volts, n'ayant aucune connexion électrique avec le support plan 15 et étant de surcroît isolé de la première liaison électrique 10 par la matrice isolante 18. Cette isolation des liaisons électriques 10,11 l'une de l'autre augmente la sécurité de fonctionnement du dispositif de connexion 1, tout en permettant un accroissement de sa compacité à partir d'un rapprochement l'une de l'autre des liaisons électriques 10,11 sans mettre en place des zones où des arcs électriques sont susceptibles de se créer. De plus, la matrice 18 est notamment réalisée en téréphtalate de polycyclohexyldiméthylène qui est aisément rapportable sur les conducteurs électriques 13,14,17 par surmoulage. Enfin, un tel matériau est compatible avec une étape de refusion du procédé de réalisation d'un tel dispositif de connexion 1 qui consiste à rapporter simultanément au moins les premier 13 et deuxième 14 conducteurs sur le support plan 15, par soudage, par brasage ou par tout autre moyen d'assemblage équivalent.

Le support plan 15 est notamment constitué d'une carte électronique 19 de commande destinée à piloter et contrôler la mise en œuvre sélective de l'élément chauffant 2, et donc du radiateur électrique 3. A cet effet, la carte électronique 19 supporte autant d'interrupteurs électriques 20 que le radiateur électrique 3 comporte d'éléments chauffants 2. Chaque interrupteur électrique 20 a pour fonction d'autoriser ou d'interdire le passage du courant électrique à l'intérieur de la première liaison électrique 10 pour mettre en œuvre l'élément chauffant 2 auquel il est affecté ou empêcher cette mise en œuvre. La carte électronique 19 est constituée d'une platine 21 réalisée en résine époxy sur laquelle sont rapportées autant de pistes électriques 22 que d'interrupteurs électriques 20. Chaque piste électrique 22 est destinée à relier une première patte de liaison 23 que comporte le premier conducteur électrique 13 avec une deuxième patte de liaison 24 que comporte le deuxième conducteur électrique 14. L'interrupteur électrique 20 associé à cette piste électrique 22 est interposé entre les première 23 et deuxième 24 pattes de liaison correspondantes. Un tel interrupteur électrique 20 est par exemple un transistor à effet de champ Métal-Oxyde, du type « MOSFET » notamment, ou tout autre composant électronique, tel qu'un relais magnétique, apte à autoriser/interdire le passage d'un courant électrique à son travers en fonction d'une instruction de commande qu'il reçoit.

Sur la variante de réalisation illustrée sur la fig.1, dans laquelle le radiateur électrique 3 comprend un élément chauffant unique 2, le premier conducteur électrique 13 comprend un premier plot 25 de connexion électrique avec le premier plot 6 de ladite source 5 tandis que le deuxième conducteur électrique 14 comprend une première borne 26 de liaison électrique avec la première borne 8 de l'élément chauffant 2. Selon cette variante de réalisation, le troisième conducteur électrique 17 comprend un deuxième plot 27 de connexion électrique avec le deuxième plot 7 de ladite source 5 et une deuxième borne 28 de liaison électrique avec la deuxième borne 9 de l'élément chauffant 2.

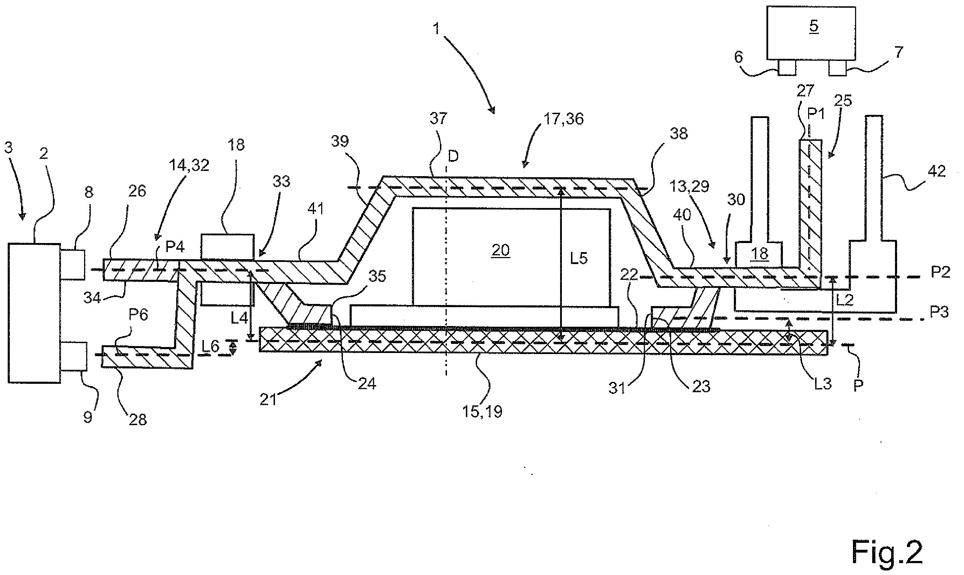

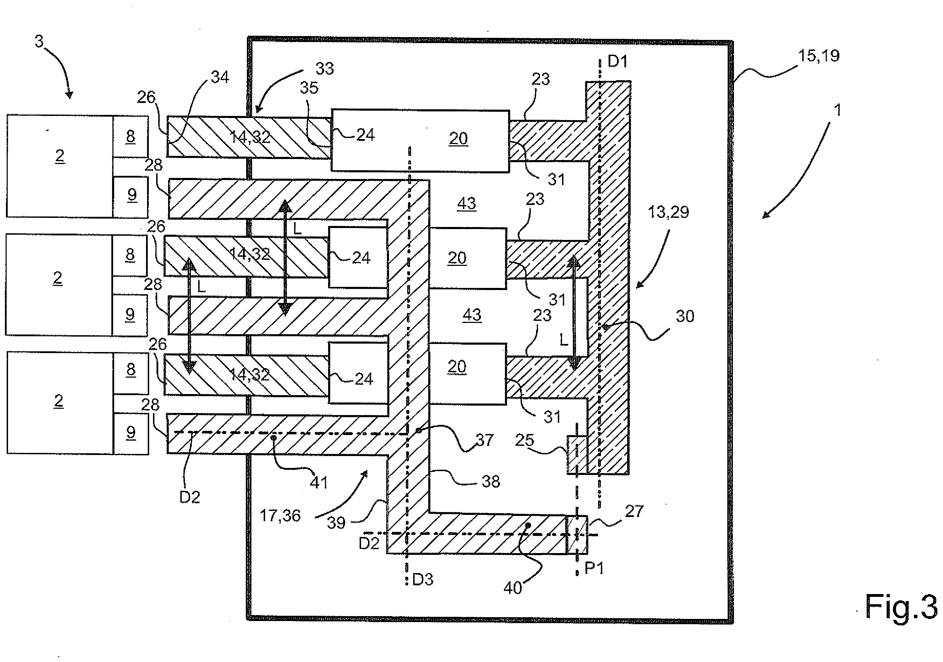

Sur les fig.2 et fig.3, le dispositif de connexion 1 est destiné à relier les deux plots 6,7 de la source d'alimentation électrique 5 aux bornes 8 et 9 respectives de trois éléments chauffants 2 constitutifs du radiateur électrique 3. Dans ce cas, le dispositif de connexion électrique 1 comporte cinq conducteurs électriques 13,14,17, à savoir un unique premier conducteur électrique 13, trois deuxièmes conducteurs électriques 14 et un unique troisième conducteur électrique 17. Plus généralement, les éléments chauffants 2 étant au nombre de N, le dispositif de connexion 1 comporte un unique premier conducteur électrique 13, un unique troisième conducteur électrique 17 et N deuxièmes conducteurs électriques 14.

Le premier conducteur électrique 13 est constitué d'un premier ensemble monobloc 29 comprenant un bandeau conducteur 30 étendu dans un plan P2 sensiblement parallèle au plan P. Ce bandeau conducteur 30 est allongé selon une direction générale d'extension D1 incluse dans le plan P2. Le bandeau conducteur 30 est équipé à l'un de ses bords de plus grande dimension du premier plot 25 de connexion électrique, qui s'étend dans un plan P1 sensiblement orthogonal au plan P, et de trois premières pattes 23 de liaison électrique. Deux premières pattes 23 de liaison électrique successives sont espacées l'une de l'autre d'une distance L. Chaque première patte 23 de liaison électrique s'étend au moins partiellement dans un plan P3 sensiblement parallèle au plan P. Plus particulièrement, l'extrémité distale 31 de chaque première patte 23 s'étend dans le plan P3.

Le deuxième conducteur électrique 14 est constitué d'un deuxième ensemble monobloc 32 comprenant une languette conductrice 33 qui s'étend également dans le plan P2 à l'instar du bandeau conducteur 30. La languette conductrice 33 s'étend toutefois selon une direction générale d'extension D2 qui est sensiblement orthogonale à la direction générale d'extension D1 du bandeau conducteur 30. Une première 34 des extrémités 34,35 de la languette conductrice 33 est équipée de la première borne 26 de liaison électrique avec la première borne 8 de l'élément chauffant 2 tandis qu'une deuxième extrémité 35 de la languette conductrice 33 est équipée de la deuxième patte 24 de liaison électrique. Cette dernière 24 s'étend au moins partiellement dans le plan P3. Plus particulièrement, la deuxième extrémité 35 de chaque deuxième patte 24 s'étend dans le plan P3. La première borne 26 de liaison électrique s'étend dans un plan P4 également sensiblement parallèle au plan P. Deux deuxièmes pattes 24 de liaison électrique successives sont également espacées l'une de l'autre de la distance L, équivalente à la distance de séparation entre deux premières pattes 23 de liaison électrique.

Le troisième élément conducteur 17 est constitué d'un troisième ensemble monobloc 36 comprenant un plateau conducteur principal 37 allongé qui s'étend dans un plan P5 sensiblement parallèle au plan P. Le plateau conducteur principal 37 s'étend selon une direction générale d'extension D3 qui est sensiblement parallèle à la direction générale d'extension D1 du bandeau conducteur 30. Le plateau conducteur principal 37 est équipé à l'un 38 des ses bords 38,39 de plus grande dimension d'un premier plateau conducteur secondaire 40 qui est pourvu du deuxième plot 27 de connexion électrique. Le premier plateau secondaire 40 s'étend dans le plan P2 tandis que le deuxième plot 27 de connexion électrique s'étend dans le plan P1. L'autre 39 des bords 38,39 de plus grande dimension du plateau conducteur principal 37 est équipé de trois deuxièmes plateaux conducteurs secondaires 41 qui s'étendent également dans le plan P2. Chaque deuxième plateau conducteur secondaire 41 est équipé d'une deuxième borne 28 de liaison électrique avec la deuxième borne 9 de l'élément chauffant 2, cette deuxième borne 28 de liaison électrique s'étendant dans un plan P6 sensiblement parallèle au plan P. Les premier 40 et deuxième 41 plateaux conducteurs secondaires s'étendent selon la direction générale d'extension D2 des languettes conductrices 33. On notera aussi que deux plateaux conducteurs secondaires successifs 41 sont espacés l'un de l'autre de la distance L.

En se reportant plus particulièrement sur la fig.2, l'interrupteur électrique 20 est interposé entre le plateau conducteur principal 37 et la piste électrique 22 affectée à cet interrupteur électrique 20. Plus particulièrement, le plateau principal 37 surplombe l'ensemble des interrupteurs électriques 20 que porte la carte de commande 19. Ces dispositions sont telles qu'une distance L5 prise entre le plan P5 et le plan P est de l'ordre de grandeur de la hauteur de l'interrupteur électrique 20. Par ailleurs, la distance L5 est supérieure à l'une quelconque d'une distance L2 prise entre le plan P2 et le plan P, d'une distance L3 prise entre le plan P3 et le plan P, d'une distance L4 prise entre le plan P4 et le plan P et d'une distance L6 prise entre le plan P6 et le plan P. Il en découle que l'encombrement du dispositif de connexion 1 selon une direction D perpendiculaire au plan P est réduit au minimum.

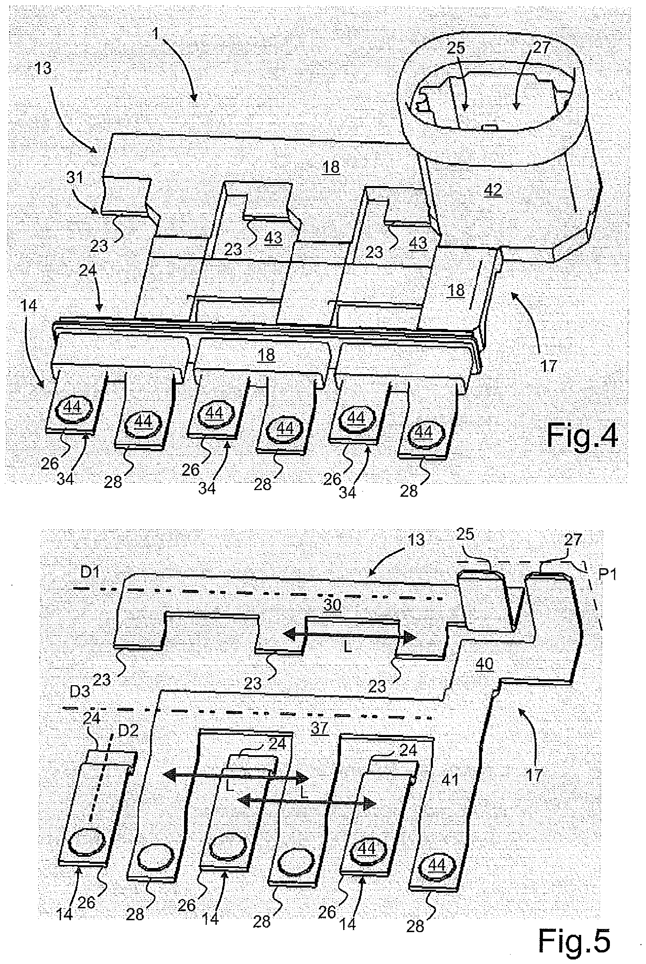

Sur la fig.4, la matrice 18 enveloppe le premier conducteur électrique 13, le troisième conducteur électrique 17 et les trois deuxièmes conducteurs électriques 14. Plus particulièrement, la matrice 18 recouvre le bandeau conducteur 30, les languettes conductrices 33, le plateau conducteur principal 37 et les plateaux conducteurs secondaires 40,41. Les première et deuxième bornes de liaisons électriques 26,28 émergent hors de la matrice 18 pour permettre leur connexion aux bornes correspondantes 8,9 des éléments chauffants 2. De même, les première et deuxième pattes 24 de liaison électrique émergent hors de la matrice 18 pour autoriser leur connexion électrique avec les pistes électriques correspondantes. Il en ressort que la matrice 18 constitue un moyen de maintien entre eux des conducteurs électriques 13,14,17. La matrice 18 intègre en outre une enveloppe 42 qui entoure les premier 25 et deuxième 27 plots de connexion électrique pour la réception d'un connecteur électrique en liaison avec la source d'alimentation 5. La matrice 18 ménage également des fenêtres 43 entre les plateaux 37,40,41, et le bandeau conducteur 30 pour permettre de visualiser des composants portés par la carte de commande 19 ou des liaisons entre ces composants. Ces fenêtres 43 permettent aussi un accès physique aisé à ces composants, en offrant notamment un passage pour des instruments de contrôle de leur fiabilité. Ces fenêtres 43 permettent encore de recouvrir ces composants et/ou ces liaisons d'un vernis pour empêcher la création des courts-circuits notamment en atmosphère humide.

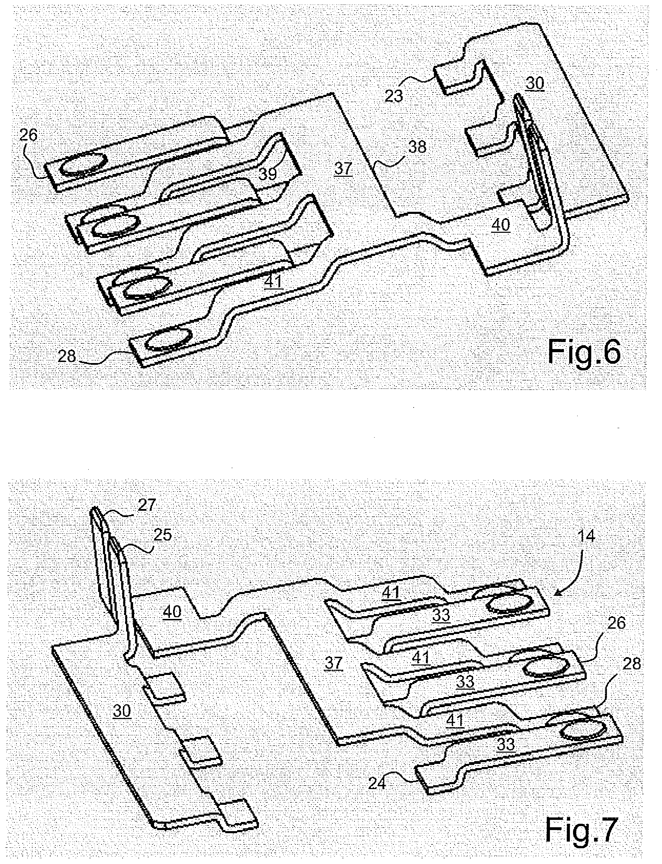

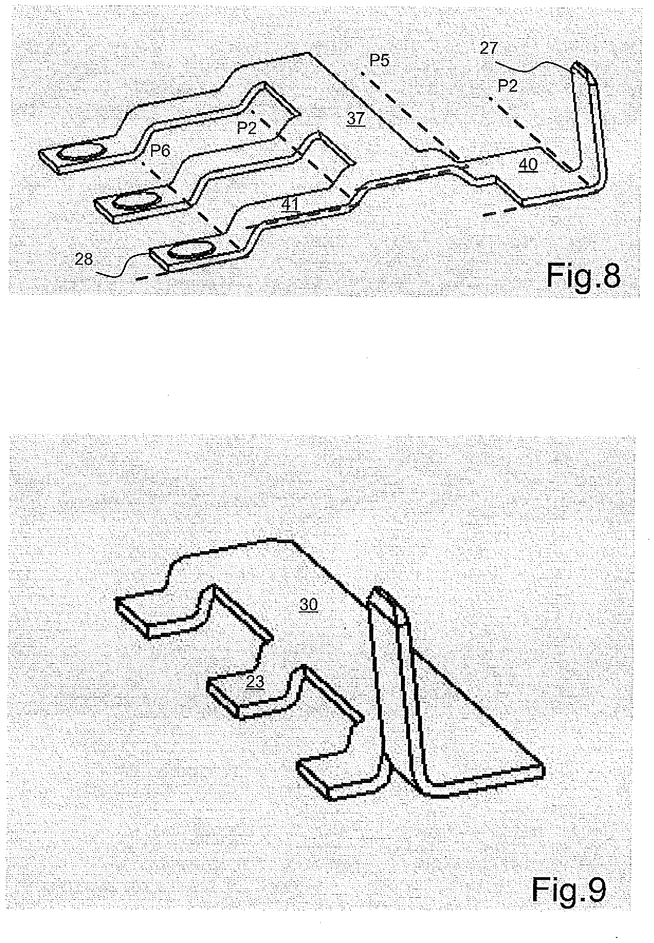

En se reportant également sur les fig.5, fig.6, fig.7 et fig.8, les première 26 et deuxième 28 bornes de liaison électrique des deuxième 14 et troisième 17 conducteurs électriques sont équipées de pastilles 44 pour faciliter leur assemblage par soudage, par brasage, ou par tout autre moyen de fixation analogue. Selon un autre mode de réalisation, ces bornes 26,28 de liaison électrique sont susceptibles d'être équipées d'organes de liaison mécanique avec les bornes 8,9 correspondantes des éléments chauffants 2, tels que des broches ou des orifices de réception de broches dont sont pourvues les bornes des éléments chauffants. En se reportant aussi sur les fig.8 et fig.9, on notera que les premier 25 et deuxième 27 plots de connexion électrique comportent une extrémité respective pourvue d'un chanfrein en vue de faciliter la mise en place du connecteur électrique à l'intérieur de l'enveloppe 42.

## Revendications

1. Dispositif de connexion électrique (1) interposé entre des plots (6,7) d'une source d'alimentation électrique (5) et des bornes (8,9) d'au moins un élément chauffant (2) constitutif d'un radiateur électrique (3) traversé par un flux d'air (4), le dispositif de connexion électrique (1) comprenant :
- une première liaison électrique (10) entre une première borne électrique (8) de l'élément chauffant (2) et un premier plot (6) de ladite source (5) qui est porté à un premier potentiel électrique, et
- une deuxième liaison électrique (11) entre une deuxième borne électrique (9) de l'élément chauffant (2) et un deuxième plot (7) de ladite source (5) qui est porté à un second potentiel électrique différent du premier potentiel électrique, **caractérisé en ce que** la première liaison électrique (10) comprend un premier conducteur électrique (13) et au moins un deuxième conducteur électrique (14), la deuxième liaison électrique (11) comprend un troisième conducteur électrique monobloc (17), les premier (13), deuxième (14) et troisième (17) conducteurs électriques étant conjointement et au moins partiellement noyés dans une matrice (18) électriquement isolante, **en ce que** le premier conducteur électrique (13) et au moins le deuxième conducteur électrique (14) sont assemblés entre eux par l'intermédiaire d'un support plan (15) qui est agencé en une carte électronique (19) de commande de la mise en œuvre du radiateur électrique (3), et **en ce que** le premier conducteur électrique (13) comporte au moins une première patte (23) de liaison électrique avec la carte électronique (19), et le deuxième conducteur électrique (14) comporte une deuxième patte (24) de liaison électrique avec la carte électronique (19), les première (23) et deuxième (24) pattes de liaison émergeant hors de la matrice (18) pour leur mise en contact électrique avec une piste électrique respective (22) que comporte ladite carte électronique (19).

2. Dispositif de connexion selon la revendication 1, **caractérisé en ce que** la piste électrique (22) est équipée d'un interrupteur électrique (20) interposé entre les première (23) et deuxième (24) pattes de liaison électrique.

3. Dispositif de connexion selon l'une quelconque des revendications 1 et 2, **caractérisé en ce que** le premier conducteur électrique (13) est constitué d'un premier ensemble monobloc (29) comprenant :
- un premier plot (25) de connexion électrique avec l'un des plots (6,7) de ladite source (5), et
- un bandeau conducteur (30) équipé du premier plot (25) de connexion électrique et d'au moins une première patte (23) de liaison électrique.

4. Dispositif de connexion selon la revendication 3, **caractérisé en ce que** le bandeau conducteur (30) s'étend dans un plan P2 sensiblement parallèle à un plan P d'extension générale du support plan (15).

5. Dispositif de connexion selon la revendication 4, **caractérisé en ce que** ladite première patte (23) de connexion électrique s'étend au moins partiellement dans un plan P3 sensiblement parallèle au plan P.

6. Dispositif de connexion selon l'une quelconque des revendications 1 à 5, **caractérisé en ce que** le deuxième conducteur électrique (14) est constitué d'un deuxième ensemble monobloc (32) comprenant une languette conductrice (33) équipée à l'une (34) de ses extrémités (34,35) d'une première borne (26) de liaison électrique avec l'une des bornes (8,9) de l'élément chauffant (2) et à l'autre (35) de ses extrémités (34,35) de la deuxième patte (24) de liaison électrique avec la piste électrique (22).

7. Dispositif de connexion selon l'une quelconque des revendications précédentes, **caractérisé en ce que** le troisième conducteur électrique (17) comprend :
- un deuxième plot (27) de connexion électrique avec l'autre des plots (7,6) de ladite source (5),
- un plateau conducteur principal (37) qui est bordé :
- d'un premier plateau conducteur secondaire (40) reliant le plateau conducteur principal (37) au deuxième plot (27) de connexion électrique,
- d'au moins un deuxième plateau conducteur secondaire (41) reliant le plateau conducteur principal (37) à une deuxième borne (28) de liaison électrique avec l'autre des bornes (9,8) de l'élément chauffant (2).

8. Dispositif de connexion selon l'une quelconque des revendications précédentes, **caractérisé en ce que**, les éléments chauffants (2) étant au nombre de N, le dispositif de connexion (1) comporte un premier conducteur électrique (13), un troisième conducteur électrique (17) et N deuxièmes conducteurs électriques (14).

9. Dispositif de connexion selon les revendications 3, 6 et 7, **caractérisé en ce que** la matrice (18) constitue un moyen de maintien entre eux du bandeau conducteur (30), de la languette conductrice (33) et des premier (40) et deuxième (41) plateaux conducteurs secondaires.

10. Dispositif de connexion selon les revendications 6 et 7, **caractérisé en ce que** les première (26) et deuxième (28) bornes de liaison électrique émergent hors de la matrice (18) pour leur connexion aux bornes (8,9) correspondantes de l'élément chauffant (2).

11. Dispositif de connexion selon les revendications 1, 2 et 7, **caractérisé en ce que** l'interrupteur électrique (20) est interposé entre le plateau conducteur principal (37) et la carte électronique (19).

12. Procédé de réalisation d'un dispositif de connexion selon l'une quelconque des revendications précédentes, en ce qu'il comporte une étape d'apport par surmoulage de la matrice (18) autour des premier (13), deuxième (14) et troisième (17) conducteurs électriques.

13. Procédé de réalisation d'un dispositif de connexion selon la revendication 12, le dispositif étant conforme à l'une quelconque des revendications 1 à 11, **caractérisé en ce qu'**il comporte en outre une étape de refusion au cours de laquelle un interrupteur électrique (20) et les première (23) et deuxième (24) pattes de liaison électrique sont simultanément rapportés par soudage sur la piste électrique (22) de la carte électronique (19).

## Patentansprüche

1. Elektrische Anschlussvorrichtung (1), die zwischen Kontaktstücken (6, 7) einer Stromversorgungsquelle (5) und Anschlüssen (8, 9) wenigstens eines Heizelements (2), das Bestandteil eines elektrischen Heizkörpers (3) ist, der von einem Luftstrom (4) durchquert wird, angeordnet ist, wobei die elektrische Anschlussvorrichtung (1) umfasst:
- eine erste elektrische Verbindung (10) zwischen einem ersten elektrischen Anschluss (8) des Heizelements (2) und einem ersten Kontaktstück (6) der Quelle (5), welches auf einem ersten elektrischen Potential liegt, und
- eine zweite elektrische Verbindung (11) zwischen einem zweiten elektrischen Anschluss (9) des Heizelements (2) und einem zweiten Kontaktstück (7) der Quelle (5), welches auf einem zweiten elektrischen Potential liegt, das von dem ersten elektrischen Potential verschieden ist,
**dadurch gekennzeichnet, dass** die erste elektrische Verbindung (10) einen ersten elektrischen Leiter (13) und wenigstens einen zweiten elektrischen Leiter (14) umfasst, die zweite elektrische Verbindung (11) einen einstückigen dritten elektrischen Leiter (17) umfasst, wobei der erste (13), zweite (14) und dritte (17) elektrische Leiter gemeinsam und wenigstens teilweise in eine elektrisch isolierende Matrix (18) eingebettet sind, dadurch, dass der erste elektrische Leiter (13) und wenigstens der zweite elektrische Leiter (14) über einen ebenen Träger (15) miteinander verbunden sind, welcher in einer Leiterplatte (19) zur Steuerung des Einsatzes des elektrischen Heizkörpers (3) angeordnet ist, und dadurch, dass der erste elektrische Leiter (13) wenigstens einen ersten Fuß (23) zur elektrischen Verbindung mit der Leiterplatte (19) aufweist und der zweite elektrische Leiter (14) einen zweiten Fuß (24) zur elektrischen Verbindung mit der Leiterplatte (19) aufweist, wobei der erste (23) und zweite (24) Verbindungsfuß aus der Matrix (18) herausragen, um in elektrischen Kontakt mit einer jeweiligen elektrischen Leiterbahn (22) gebracht zu werden, die auf der Leiterplatte (19) ausgebildet ist.

2. Anschlussvorrichtung nach Anspruch 1, **dadurch gekennzeichnet, dass** die elektrische Leiterbahn (22) mit einem elektrischen Schalter (20) ausgestattet ist, der zwischen dem ersten (23) und zweiten (24) Fuß zur elektrischen Verbindung angeordnet ist.

3. Anschlussvorrichtung nach einem der Ansprüche 1 und 2, **dadurch gekennzeichnet, dass** der erste elektrische Leiter (13) aus einer ersten einstückigen Anordnung (29) besteht, welche umfasst:
- ein erstes Kontaktstück (25) zum elektrischen Anschluss an eines der Kontaktstücke (6, 7) der Quelle (5), und
- ein Leiterband (30), das mit dem ersten Kontaktstück (25) zum elektrischen Anschluss und mit wenigstens einem ersten Fuß (23) zur elektrischen Verbindung ausgestattet ist.

4. Anschlussvorrichtung nach Anspruch 3, **dadurch gekennzeichnet, dass** sich das Leiterband (30) in einer Ebene P2 erstreckt, die im Wesentlichen parallel zu einer Ebene P der allgemeinen Erstreckung des ebenen Trägers (15) ist.

5. Anschlussvorrichtung nach Anspruch 4, **dadurch gekennzeichnet, dass** sich der erste Fuß (23) zum elektrischen Anschluss wenigstens teilweise in einer Ebene P3 erstreckt, die im Wesentlichen parallel zur Ebene P ist.

6. Anschlussvorrichtung nach einem der Ansprüche 1 bis 5, **dadurch gekennzeichnet, dass** der zweite elektrische Leiter (14) aus einer zweiten einstückigen Anordnung (32) besteht, die eine leitende Zunge (33) umfasst, die an einem (34) ihrer Enden (34, 35) mit einem ersten Anschluss (26) zur elektrischen Verbindung mit einem der Anschlüsse (8, 9) des Heizelements (2) und am anderen (35) ihrer Enden (34, 35) mit dem zweiten Fuß (24) zur elektrischen Verbindung mit der elektrischen Leiterbahn (22) ausgestattet ist.

7. Anschlussvorrichtung nach einem der vorhergehenden Ansprüche, **dadurch gekennzeichnet, dass** der dritte elektrische Leiter (17) umfasst:
- ein zweites Kontaktstück (27) zum elektrischen Anschluss an das andere der Kontaktstücke (7, 6) der Quelle (5),
- eine leitende Hauptplatte (37), welche umrandet wird:
- von einer ersten sekundären leitenden Platte (40), welche die leitende Hauptplatte (37) mit dem zweiten Kontaktstück (27) zum elektrischen Anschluss verbindet,
- von wenigstens einer zweiten sekundären leitenden Platte (41), welche die leitende Hauptplatte (37) mit einem zweiten Anschluss (28) zur elektrischen Verbindung mit dem anderen der Anschlüsse (9, 8) des Heizelements (2) verbindet.

8. Anschlussvorrichtung nach einem der vorhergehenden Ansprüche, **dadurch gekennzeichnet, dass**, wenn eine Anzahl N von Heizelementen (2) vorhanden ist, die Anschlussvorrichtung (1) einen ersten elektrischen Leiter (13), einen dritten elektrischen Leiter (17) und N zweite elektrische Leiter (14) aufweist.

9. Anschlussvorrichtung nach den Ansprüchen 3, 6 und 7, **dadurch gekennzeichnet, dass** die Matrix (18) ein Mittel zum Zusammenhalten des Leiterbandes (30), der leitenden Zunge (33) und der ersten (40) und zweiten (41) sekundären leitenden Platte darstellt.

10. Anschlussvorrichtung nach den Ansprüchen 6 und 7, **dadurch gekennzeichnet, dass** der erste (26) und zweite (28) Anschluss zur elektrischen Verbindung für ihren Anschluss an die entsprechenden Anschlüsse (8, 9) des Heizelements (2) aus der Matrix (18) herausragen.

11. Anschlussvorrichtung nach den Ansprüchen 1, 2 und 7, **dadurch gekennzeichnet, dass** der elektrische Schalter (20) zwischen der leitenden Hauptplatte (37) und der Leiterplatte (19) angeordnet ist.

12. Verfahren zur Herstellung einer Anschlussvorrichtung nach einem der vorhergehenden Ansprüche, **dadurch gekennzeichnet, dass** es einen Schritt der Aufbringung der Matrix (18) um den ersten (13), zweiten (14) und dritten (17) elektrischen Leiter herum durch Aufformen umfasst.

13. Verfahren zur Herstellung einer Anschlussvorrichtung nach Anspruch 12, wobei die Vorrichtung eine nach einem der Ansprüche 1 bis 11 ist, **dadurch gekennzeichnet, dass** es außerdem einen Schritt des Aufschmelzens umfasst, in welchem ein elektrischer Schalter (20) und der erste (23) und zweite (24) Fuß zur elektrischen Verbindung gleichzeitig durch Schweißen auf der elektrischen Leiterbahn (22) der Leiterplatte (19) angebracht werden.

## Claims

1. Electrical connection device (1) interposed between contacts (6, 7) of an electrical power source (5) and terminals (8, 9) of at least one heating element (2) forming an electric radiator (3) traversed by an air flow (4), the electrical connection device (1) comprising:
- a first electrical link (10) between a first electrical terminal (8) of the heating element (2) and a first contact (6) of the said source (5) that has a first electrical potential, and
- a second electrical link (11) between a second electrical terminal (9) of the heating element (2) and a second contact (7) of the said source (5) that has a second electrical potential different from the first electrical potential, **characterized in that** the first electrical link (10) comprises a first electrical conductor (13) and at least one second electrical conductor (14), the second electrical link (11) comprises a third, one-piece electrical conductor (17), the first electrical conductor (13), second electrical conductor (14) and third electrical conductor (17) being jointly and at least partially embedded in an electrically insulating mould (18), **in that** the first electrical conductor (13) and at least the second electrical conductor (14) are assembled together by means of a flat carrier (15) that is arranged in an electronic circuit board (19) for controlling the use of the electric radiator (3), and **in that** the first electrical conductor (13) comprises at least a first lug (23) for an electrical link with the electronic circuit board (19), and the second electrical conductor (14) comprises a second lug (24) for an electrical link with the electronic circuit board (19), the first link lug (23) and second link lug (24) emerging from the mould (18) so that they can be placed in electrical contact with a respective electrical track (22) that is contained in the said electronic circuit board (19).

2. Connection device according to Claim 1, **characterized in that** the electrical track (22) is fitted with an electrical switch (20) interposed between the first electrical link lug (23) and second electrical link lug (24).

3. Connection device according to either of Claims 1 and 2, **characterized in that** the first electrical conductor (13) consists of a first one-piece assembly (29) comprising:
- a first contact (25) for electrical connection with one of the contacts (6, 7) of the said source (5), and
- a conductive strip (30) fitted with the first electrical connection contact (25) and with at least a first electrical link lug (23).

4. Connection device according to Claim 3, **characterized in that** the conductive strip (30) extends in a plane P2 substantially parallel to a plane P of general extension of the flat carrier (15) .

5. Connection device according to Claim 4, **characterized in that** the said first electrical connection lug (23) extends at least partially in a plane P3 substantially parallel to the plane P.

6. Connection device according to any one of Claims 1 to 5, **characterized in that** the second electrical conductor (14) consists of a second one-piece assembly (32) comprising a conductive tab (33) fitted, at one (34) of its ends (34, 35), with a first terminal (26) for an electrical link with one of the terminals (8, 9) of the heating element (2) and, at the other (35) of its ends (34, 35), with the second lug (24) for an electrical link with the electrical track (22).

7. Connection device according to any one of the preceding claims, **characterized in that** the third electrical conductor (17) comprises:
- a second contact (27) for electrical connection with the other of the contacts (7, 6) of the said source (5),
- a main conductive plate (37) that is bordered:
- by a first secondary conductive plate (40) connecting the main conductive plate (37) to the second electrical connection contact (27),
- by at least a second secondary conductive plate (41) connecting the main conductive plate (37) to a second electrical link terminal (28) with the other of the terminals (9, 8) of the heating element (2).

8. Connection device according to any one of the preceding claims, **characterized in that**, the heating elements (2) being N in number, the connection device (1) comprises a first electrical conductor (13), a third electrical conductor (17) and N second electrical conductors (14).

9. Connection device according to Claims 3, 6 and 7, **characterized in that** the mould (18) forms a means of holding together the conductive strip (30), the conductive tab (33) and the first secondary conductive plate (40) and second secondary conductive plate (41).

10. Connection device according to Claims 6 and 7, **characterized in that** the first electrical link terminal (26) and second electrical link terminal (28) emerge from the mould (18) to be connected to the corresponding terminals (8, 9) of the heating element (2).

11. Connection device according to Claims 1, 2 and 7, **characterized in that** the electrical switch (20) is interposed between the main conductive plate (37) and the electronic circuit board (19).

12. Method for producing a connection device according to any one of the preceding claims, in that it comprises an insertion step by overmoulding the mould (18) around the first electrical conductor (13), the second electrical conductor (14) and the third electrical conductor (17).

13. Method for producing a connection device according to Claim 12, the device complying with any one of Claims 1 to 11, **characterized in that** it also comprises a remelting step during which an electrical switch (20) and the first electrical link lug (23) and second electrical link lug (24) are simultaneously soldered to the electrical track (22) of the electronic circuit board (19).
